# EUROPEAN PATENT APPLICATION

(11) **EP 4 187 981 A1**
(43) Date of publication of application: **31.05.2023**
(21) Application number: 20946320.7
(22) Date of filing: 24.07.2020
(51) Int. Cl.: H04W 52/02, H04W 68/00

(54) **WAKE-UP SIGNAL PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2020/104510
(87) International publication number: WO 2022/016530

(57) **Abstract**

Disclosed in embodiments of the present application are a wake-up signal (WUS) processing method and apparatus, a communication device, and a storage medium. The WUS processing method comprises: in response to a monitoring moment of a WUS at least partially overlapping a receiving moment of a paging message, or the monitoring moment at least partially overlapping a handover period of an uplink/downlink handover, determining a monitoring result of the WUS according to a monitoring policy.

## Description

### TECHNICAL FIELD

Embodiments of the present disclosure relate to a field of wireless communication technologies, and particularly to a method and an apparatus for processing a wake up signal, a communication device, and a storage medium.

### BACKGROUND

Wake Up Signal (WUS) is also called power saving signal. The user equipment (UE) determines whether to monitor downlink control information (DCI) on one or more physical downlink control channels (PDCCHs) associated with the WUS according to whether the WUS is received from a base station.

### SUMMARY

Embodiments of the present disclosure provides a method and an apparatus for processing a wake up signal, a communication device and a storage medium.

Embodiments of a first aspect of the present disclosure provide a method for processing a wake up signal. The method includes:
determining a monitoring result of the WUS according to a monitoring strategy, in response to a monitoring time of the WUS overlapping at least partially with a receiving time of a paging message, or the monitoring time overlapping at least partially with a switching period of uplink and downlink switching.

Embodiments of a second aspect of the present disclosure provide a method for processing a wake up signal. The method includes:
sending indication information, wherein the indication information is configured to validate a first strategy or a second strategy in monitoring strategies; wherein, the first strategy is configured to determine that the WUS is considered to be detected, in response to a monitoring time of the WUS overlapping at least partially with a receiving time of a paging message or overlapping at least partially with a switching period of uplink and downlink switching;
the second strategy is configured to determine that the WUS is not considered to be detected, in response to the monitoring time of the WUS overlapping at least partially with the receiving time of the paging message or overlapping at least partially with the switching period of the uplink and downlink switching.

Embodiments of a third aspect of the present disclosure provide an apparatus for processing a wake up signal. The apparatus includes:
a first determining module, configured to determine a monitoring result of the WUS according to a monitoring strategy, in response to a monitoring time of the WUS overlapping at least partially with a receiving time of a paging message, or the monitoring time overlapping at least partially with a switching period of uplink and downlink switching.

Embodiments of a fourth aspect of the present disclosure provide an apparatus for processing a wake up signal. The apparatus includes:
a sending module, configured to send indication information, wherein the indication information is configured to validate a first strategy or a second strategy in monitoring strategies; wherein, the first strategy is configured to determine that the WUS is considered to be detected, in response to a monitoring time of the WUS overlapping at least partially with a receiving time of a paging message or overlapping at least partially with a switching period of uplink and downlink switching;
the second strategy is configured to determine that the WUS is not considered to be detected, in response to the monitoring time of the WUS overlapping at least partially with the receiving time of the paging message or overlapping at least partially with the switching period of the uplink and downlink switching.

Embodiments of a fifth aspect of the present disclosure provide a communication device, including a processor, a transceiver, a memory and an executable program that is stored on the memory and can be run by the processor. When the executable program is run by the processor, the method described by any technical solution in the first aspect or the second aspect is implemented.

Embodiments of a sixth aspect of the present disclosure provide a computer storage medium. The computer storage medium is stored with a computer program. When the computer program is executed by a processor, the method described by any technical solution in the first aspect or the second aspect is implemented.

The technical solution provided by embodiments of the present disclosure determines the monitoring result of the WUS according to the monitoring strategy when determining that the monitoring time of the signal WUS overlaps at least partially with the receiving time of the paging message or the monitoring time overlaps at least partially with the switching period of the uplink and downlink switching. The monitoring strategy is known by both the network side and the terminal to determine the monitoring result, compared with that the terminal is unable to determine the monitoring result, and does not know whether to execute the subsequent DCI monitoring, which leads to the confusion of execution in the UE, thus missing the DCI to be monitored or executing unnecessary monitoring.

It should be understood that the above general description and the following detailed description are only illustrative and explanatory, and do not limit embodiments of the present disclosure.

### BRIEF DESCRIPTION OF THE DRAWINGS

The drawings herein are incorporated into the specification and constitute a part of the specification, illustrate embodiments in conformity with the present disclosure, and explain the principle of embodiments of the present disclosure together with the specification.
FIG. 1 is a diagram illustrating a wireless communication system.
FIG. 2 is a flowchart illustrating a method for controlling channel detection according to an exemplary embodiment.
FIG. 3 is a flowchart illustrating a method for controlling channel detection according to an exemplary embodiment.
FIG. 4 is a flowchart illustrating a method for processing a wake up signal according to an exemplary embodiment.
FIG. 5 is a diagram illustrating overlap between a receiving time of PO and PDSCH and a monitoring time of WUS according to an exemplary embodiment
FIG. 6 is a flowchart illustrating another method for processing a wake up signal according to an exemplary embodiment.
FIG. 7 is a flowchart illustrating another method for processing a wake up signal according to an exemplary embodiment.
FIG. 8 is a block diagram illustrating an apparatus for processing a wake up signal according to an exemplary embodiment.
FIG. 9 is a block diagram illustrating an apparatus for processing a wake up signal according to an exemplary embodiment.
FIG. 10 is a block diagram illustrating a UE according to an exemplary embodiment.
FIG. 11 is a block diagram illustrating a base station according to an exemplary embodiment.

### DETAILED DESCRIPTION

The exemplary embodiments will be described in detail here, and examples thereof are shown in the accompanying drawings. When the following descriptions refer to the accompanying drawings, unless otherwise indicated, the same numbers in different drawings represent the same or similar elements. The implementations described in the following exemplary embodiments do not represent all implementations consistent with embodiments of the present disclosure. Rather, they are merely examples of apparatuses and methods consistent with some aspects of the disclosure as detailed in the appended claims.

The terms described in the embodiments of the present disclosure are only for the purpose of describing specific embodiments and are not intended to limit the embodiments of the present disclosure. The singular forms "a", "the" used in the embodiments of the disclosure and the appended claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, and second information may also be referred to as first information. It depends on the context. For example, the word "in case of", "if' as used herein may be interpreted as "in a case that" or "when" or "in response to determining".

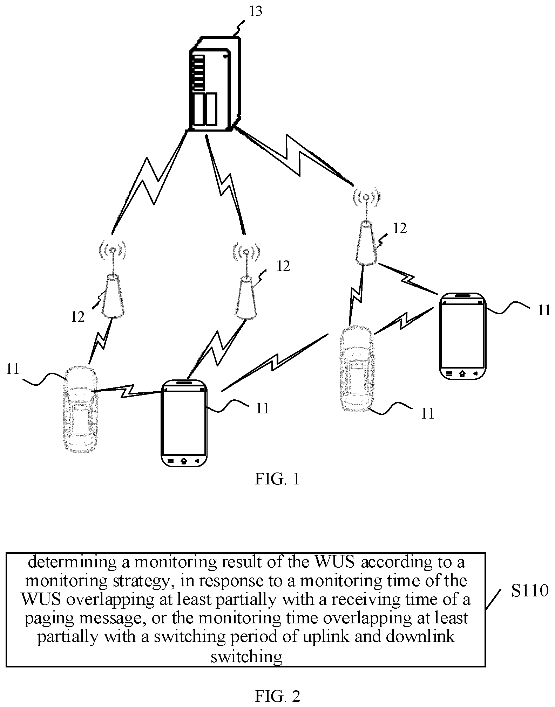

FIG. 1 is a diagram illustrating a structure of a wireless communication system in embodiments of the present disclosure. As illustrated in FIG. 1, the wireless communication system is a communication system based on a cellular mobile communication technology. The wireless communication system may include several LTEs 11 and several base stations 12.

The LTE 11 may refer to a device that provides voice and/or data connectivity for users. The UE 11 may communicate with one or more core networks through a radio access network (RAN). The UE 11 may be an internet of things terminal, for example, a sensor device, a mobile phone (or referred to as a cellular phone) and a computer having an internet of things terminal, for example, may be a fixed, portable, compact, handheld, computer built-in or vehicle apparatus, for example, a station (STA), a subscriber unit, a subscriber station, a mobile station, a mobile, a remote station, an access point, a remote terminal, an access terminal, a user terminal, a user agent, a user device or a user equipment(UE). Or, the LTE 11 may be a device of an unmanned vehicle. Or, the UE 11 also may be a vehicle device, for example, may be a vehicle computer with a wireless communication function, or a wireless terminal externally connected to a vehicle computer. Or, the UE 11 also may be a roadside device, for example, may be a street lamp, a signal lamp or other roadside device with a wireless communication function.

The base station 12 may be a network side device in the wireless communications system. The wireless communication system may be a 4th generation mobile communication (4G) system, also referred to as a long term evolution (LTE) system; or the wireless communications system may be a 5G system, also referred to as a new radio (NR) system or a 5G NR system. Or, the wireless communication system may be a next generation system of the 5G system. An access network in the 5G NR system may be referred to as a new generation-radio access network (NG-RAN). Or, the base station is a MTC system.

The base station 12 may be an eNB adopted in the 4G system. Or, the base station 12 may be a base station with a centralized-distributed architecture (gNB) in the 5G system. When the base station 12 adopts the centralized-distributed architecture, it generally includes a central unit (CU) and at least two distributed units (DUs). Protocol stacks at a Packet Data Convergence Protocol (PDCP) layer, a Radio Link Control (RLC) layer and a Media Access Control (MAC) layer are configured in the CU; a physical (PHY) layer protocol is configured in the DU. The specific implementation of the base station 12 is not limited in embodiments of the disclosure.

The base station 12 may establish a wireless connection with the LTE 11 through a radio air interface. In different implementations, the radio air interface is a radio air interface based on a 4G standard; or, the radio air interface is a radio air interface based on a 5G standard, for example, the radio air interface is a new air interface; or, the radio air interface may be a radio air interface based on a next generation mobile communication network technology standard of a 5G.

In some embodiments, an end to end (E2E) connection further may be established between UE 11, for example, in scenes such as vehicle to vehicle (V2V) communication, vehicle to infrastructure (V2I) communication and vehicle to pedestrian (V2P) communication in vehicle to everything (V2X).

In some embodiments, the wireless communication system may further include a network management device 13.

Several base stations 12 may be connected with the network management device 13. The network management device 13 may be a core network device in the wireless communications system, for example, the network management device 130 may be a mobility management entity (MME) in an evolved packet core (EPC). Or, the network management device may be other core network devices, for example, a Serving GateWay (SGW), a Public Data Network GateWay (PGW), a Policy and Charging Rules Function (PCRF) or a Home Subscriber Server (HSS), etc. The implementation form of the network management device 130 is not limited in embodiments of the disclosure.

Under Discontinuous Reception (DRX) mechanism in the idle state, the user equipment will monitor the paging DCI according to the DRX rules, so as to achieve the purpose of power saving. WUS is a low-power detection signal. If the UE detects the WUS, it means that PDCCH monitoring is required. However, if WUS is not detected, PDCCH monitoring is skipped. In the DRX scenario in the idle state, WUS is usually configured before the paging occasion (PO). If the UE does not detect WUS, it is necessary to skip the paging DCI. Otherwise, it is necessary to monitor the paging DCI. The frequency of skipping of the WUS may be 1; or, an integer greater than 1 (that is, one detection is valid for multiple subsequent valid POs).

In the future, it is considered that the coverage enhancement requires the introduction of repeated transmission. For example, the paging DCI has a number of beam repeats (for example, beam sweeping) and multiple repeated transmissions in PDSCH. At this time, PDSCH and WUS will overlap. In this case, the UE may not be able to decode both. At this time, there is a problem of missing WUS.

After the introduction of the half duplex user type, it is likely that the WUS time overlaps with the conversion period of the uplink and downlink conversion. Since the transceiver cannot decode WUS during the conversion, the problem of missing WUS may also occur. For these two cases, how should the UE monitor.

As shown in FIG. 2, the embodiment of the present disclosure provides method for processing a wake up signal, including:
S110, determining a monitoring result of the WUS according to a monitoring strategy, in response to a monitoring time of the WUS overlapping at least partially with a receiving time of a paging message, or the monitoring time overlapping at least partially with a switching period of uplink and downlink switching.

The method for processing WUS provided by the embodiment of the present disclosure is applied to a UE. The UE may be of various types, for example, it may be a full duplex UE or a half duplex UE.

The full duplex UE performs uplink and downlink communication at the same time. The half duplex UE can only perform uplink communication or downlink communication at one time. Therefore, the half duplex UE has uplink and downlink conversion. After the uplink and downlink conversion is completed, the LTE can convert from uplink transmission to downlink transmission, or the LTE can convert from downlink transmission to uplink transmission.

In another embodiment, the LTE may also be a narrowband LTE. The narrowband UE may only support working in one of the downlink band or the uplink band at a time. In this case, when the narrowband UE switches between the uplink and downlink bands, the switching result of the uplink and downlink switching will also be generated, thus introducing the switching period.

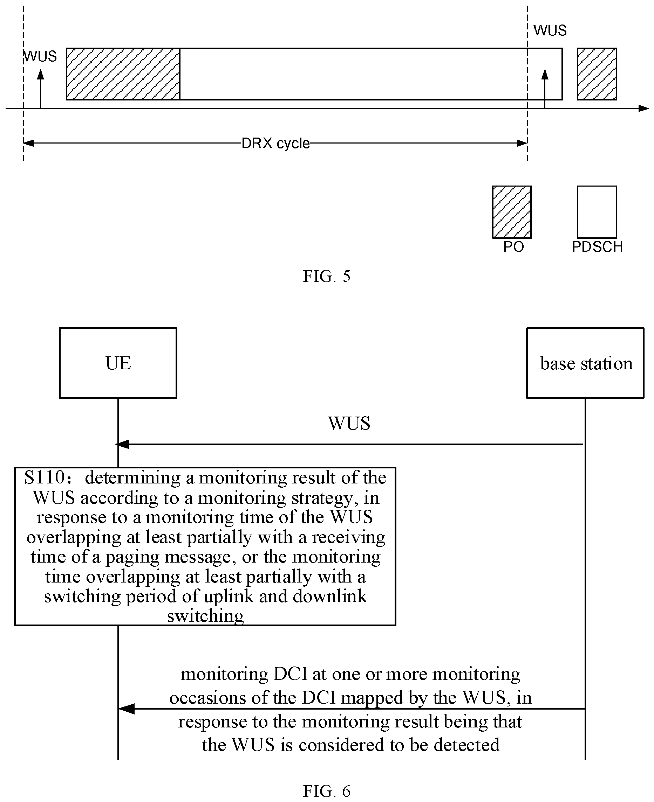

The monitoring time of WUS may generally be pre-configured by the base station, which is before or at the starting time of the DRX cycle, and/or before the paging occasion (PO). As shown in FIG. 5, the monitoring time of WUS is configured at the beginning of DRX cycle on the time axis; PO and PDSCH are configured in the DRX cycle. In FIG. 5, PDSCH overlaps with PO in time domain and covers one WUS. At the monitoring time of the WUS covered by the time window of PDSCH, the monitoring strategy mentioned in embodiments of the present disclosure can be adopted to determine the monitoring result of the WUS whose monitoring time is overlapped (that is, covered).

In embodiments of the present disclosure, if the monitoring time of WUS overlaps at least partially with the receiving time of the paging message, or if the monitoring time overlaps partially or completely with the switching period of the uplink and downlink switching, it will cause the UE to overlap the monitoring time of the corresponding WUS, then the base station may send WUS but the UE does not monitor it, or the base station may not send WUS but the UE mistakenly thinks it has monitored the wrong monitoring result. In this case, in embodiments of the present disclosure, in order to reduce the error wake-up of the UE caused by such error results or increase the unnecessary monitoring of DCI by the UE or missing DCI, the monitoring result of the WUS will be determined according to the monitoring strategy. Later, the DCI will be monitored or not monitored according to the determined monitoring result of the WUS. In this way, various problems caused by the UE's error in determining the actual monitoring result of the WUS can be reduced.

The paging message may be transmitted on the Physical Downlink Shared Channel (PDSCH).

The paging message may be received and decoded together with the paging DCI sent on the PDCCH. However, for various IoT (Internet of Things,) devices, due to their limited receiving capacity, there may be multiple transmissions in the time domain, which may lead to partial overlap or total overlap between the receiving time of the paging message on the PDSCH and the monitoring time of the WUS.

The paging DCI may be DCI that can carry a scheduling instruction for the paging message. The scheduling instruction is used to schedule resources for transmission of the paging message on PDSCH.

The base station side configures the monitoring time of WUS, the receiving time of the paging message, and the time of uplink and downlink conversion of the UE, and the may be aware of the monitoring strategy used by the LTE in advance. Therefore, the monitoring result of WUS currently sent by the base station can be deduced as the UE, so that DCI can be sent on the corresponding PDCCH, and in this case, the DCI sent can ensure that the LTE receives it, thus on one hand, reducing the missing of the UE to the DCI that must be received, and on the other hand, reducing unnecessary wake up and/or DCI monitoring of the UE, further saving UE overhead.

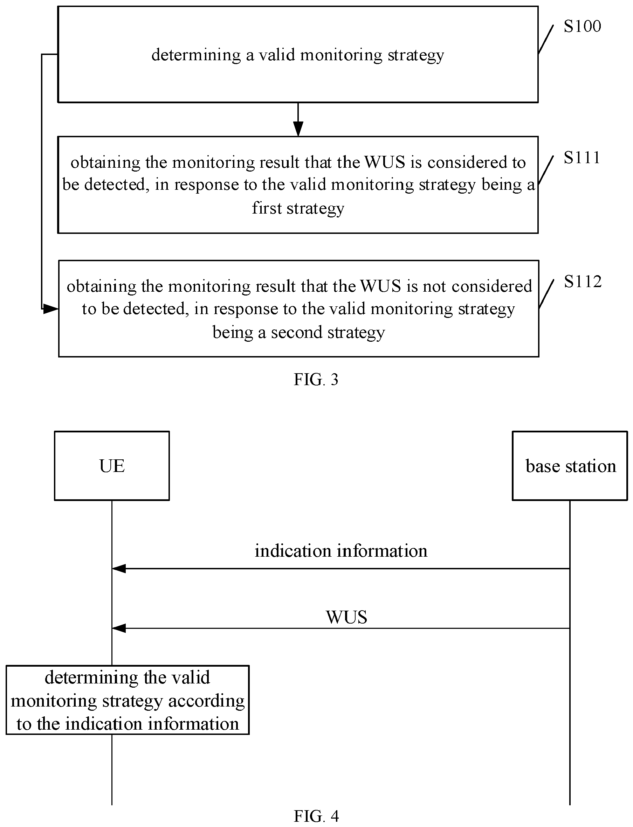

In some embodiments, as shown in FIG. 3, the method further includes:
S100: determining a valid monitoring strategy.
S110 may include:
S111: obtaining the monitoring result that the WUS is considered to be detected, in response to the valid monitoring strategy being a first strategy;
   or,
S112: obtaining the monitoring result that the WUS is not considered to be detected, in response to the valid monitoring strategy being a second strategy.

In some embodiments, there are a plurality of alternative monitoring strategies to be validated. In embodiments of the present disclosure, there is a need to determine the valid monitoring strategy, before determining the monitoring result of the WUS at the time when the monitoring time is covered by the receiving time of the paging message and/or the switching period of uplink and downlink switching.

For example, the valid monitoring strategy may be the first strategy or the second strategy.

Under the first strategy, it is uniformly considered that the monitoring result of the missed WUS is "detected" (that is, the monitoring is successful); under the second strategy, it may be uniformly considered that the monitoring result of the missed WUS is "not detected" (that is, the monitoring fails).

In one embodiment, S100 may include at least one of the following:
determining the valid first strategy or second strategy according to the type of the UE;
determining the valid first strategy or second strategy according to the LTE group where the UE is located;
determining the valid first strategy or second strategy according to the serving cell where the UE is located.

For example, the correspondence relationship between the LTE type, LTE group, or cell and the valid monitoring strategy is established in advance, so that subsequently, the UE can determine whether the first strategy or the second strategy is valid according to the UE type, UE group, or serving cell.

Of course, in other embodiments, S100 may include:
determining the valid monitoring strategy according to indication information sent by the base station, as illustrated in FIG. 5;
or,
determining the valid monitoring strategy according to a provision of a communication protocol.

The base station notifies the UE of the valid monitoring strategy by sending the indication information. The indication information may include one or more indication bits. For example, the indication information may consist of one bit that constitutes a flag bit indicating the valid monitoring strategy. For example, if the flag bit has a first value, the first strategy may be considered valid; if the flag bit has a second value, the second strategy may be considered valid. The first value and the second value may correspond to different values in "0" and "1" respectively.

Of course, in other embodiments, the number of bits corresponding to the flag bit may be multiple, not limited to one.

For example, if there are more than two, or even three or four, alternative monitoring strategies that can be used to be validated, they may be indicated by multiple bits.

The UE can determine the currently valid monitoring strategy according to the instruction of the base station by receiving the indication information.

In other embodiments, the valid monitoring strategy may be determined according to the provision of the communication protocol. For example, the communication protocol specifies the valid monitoring strategy, or which monitoring strategy is validated under which condition.

In yet other embodiments, S100 may include:
determining the valid monitoring strategy according to the provision of the communication protocol, when the indication information is not received (or it is understood that the receiving of the indication information fails);
or,
determining the default first strategy or second strategy as the valid monitoring strategy, when the indication information is not received (or it is understood that the receiving of the indication information fails).

For example, in the configuration of the UE, there is the valid monitoring strategy by default. At this time, if receiving of the indication information fails, the default monitoring strategy can be directly regarded as the valid monitoring strategy. Or, if the receiving of the indication information fails and the communication protocol does not specify the valid monitoring strategy, the default monitoring strategy will be regarded as the valid monitoring strategy.

In some embodiments, S 110 may further include at least one of the following:
obtaining the monitoring result that the WUS is considered to be detected, according to the monitoring strategy, in response to the monitoring time of the WUS overlapping at least partially with the receiving time of the paging message;
obtaining the monitoring result that the WUS is not considered to be detected, according to the monitoring strategy, in response to the UE being in an RRC connected state and the monitoring time of the WUS being within the switching period of the uplink and downlink switching of the UE.

In other embodiments, the valid monitoring strategy is determined according to the situation that the monitoring time of the current WUS is covered by other transmissions.

For example, when the monitoring time of the WUS is partially or completely covered by the receiving time of the paging message, the monitoring result that the missed WUS is considered to be detected is generated, and the monitoring result confirms that the missed WUS is considered to be detected by the UE.

For another example, according to the monitoring strategy, if the user equipment UE is in the RRC connected state and the monitoring time of the WUS is within the switching period of the uplink and downlink switching of the UE, the monitoring result that the WUS is considered to be detected is obtained. Since the UE is in the RRC connection, that is, the UE is in the wake up state, if the UE monitors the DCI due to thinking that the WUS is detected, the cost of power consumption will not increase significantly. At this time, the base station can flexibly select resources to send any DCI on the PDCCH.

In another embodiment, S 110 may further include:
obtaining the monitoring result that the WUS is not considered to be detected, according to the monitoring strategy, if the LTE is in the RRC connected state and the monitoring time of the WUS overlaps at least partially with the switching period of the uplink and downlink switching of the UE;
or,
obtaining the monitoring result that the WUS is not considered to be detected, according to the monitoring strategy, if the UE is in an RRC non-connected state and the monitoring time of the WUS overlaps at least partially with the switching period of the uplink and downlink switching of the UE. The RRC non-connected state includes an RRC idle state and an RRC inactive state.

If the UE is in the RRC non-connected state and determines that the monitoring time of the WUS overlaps at least partially with the switching period of the uplink and downlink switching of the UE, then in order to reduce the number of times the UE is woken up or the duration of wake up, it can be determined that the UE has not monitored the missed WUS currently, thus further reducing the power consumption of the UE.

In some embodiments, as shown in FIG. 6, the method further includes:
S120: monitoring DCI at one or more monitoring occasions of the DCI associated with the WUS, in response to the monitoring result being that the WUS is considered to be detected.

For the UE in the RRC non-connected state, one WUS may be associated with one or more DRX cycles, and one or more DCI may be received during ON duration of the DRX cycle.

In other embodiments, one WUS is associated with one or more POs. One or more paging DCIs may be received on one PO. In a word, the ON duration here and the time corresponding to the PO are both DCI monitoring occasions.

In some embodiments, S120 may include at least one of the following:
monitoring the paging DCI at one or more paging occasions (POs) associated with the WUS, wherein the paging DCI can be used to schedule transmission resources of the paging message;
monitoring a data DCI transmitted on the PDCCH for scheduling data transmission by the UE in the RRC connected state, during the ON duration of one or more discontinuous reception DRX cycles associated with the WUS, wherein the data DCI can be used for scheduling transmission resources of data.

Regardless of whether the UE is in the RRC connected state or RRC non-connected state, when the WUS is associated with one or more POs, the LTE will monitor the DCI according to the one or more monitoring occasions of the DCI.

The paging DCI can carry the scheduling signaling for resources of the paging message, but not limited to the scheduling signaling of the paging message. The paging DCI may also carry other contents.

Before monitoring the DCI of PDCCH for data scheduling at one or more monitoring occasions of the DCI associated with WUS, the LTE will first exit the RRC non-connected state, enter the RRC connected state, and then monitor (i.e., receive) the data DCI during the ON duration of the DRX cycle in the RRC connected state. This data DCI can be used for scheduling data transmission on the PUSCH.

In one embodiment, the method further includes:
when the monitoring result is that the WUS is not considered to be detected, not monitoring the DCI at one or more monitoring occasions of the DCI associated with the WUS.
when the monitoring result is that the WUS is not considered to be detected, the UE will not monitor the DCI at one or more monitoring occasions of the DCI associated with the WUS, that is, it will not receive the DCI.

In one embodiment, not monitoring the DCI at one or more monitoring occasions of the DCI associated with the WUS, includes at least one of the following:
not monitoring the data DCI transmitted on the PDCCH by the UE in the RRC connected state, during the ON duration in one or more DRX cycles associated with the WUS, wherein, the data DCI can be used to schedule resources for data transmission;
not monitoring the paging DCI at one or more POs associated with the WUS, wherein, the paging DCI can be used to schedule the transmission resources for the paging message.

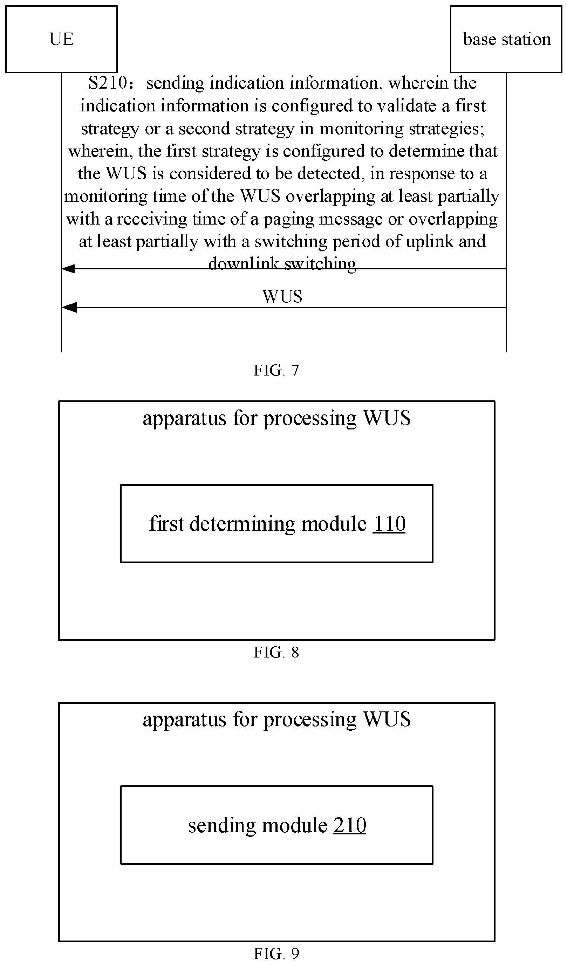

As shown in FIG. 7, this embodiment of the present disclosure provides a method for processing a wake up signal. The method includes:
S210: sending indication information, wherein, the indication information is configured to validate a first strategy or a second strategy in monitoring strategies; wherein, the first strategy is configured to determine that the WUS is considered to be detected, in response to a monitoring time of the WUS overlapping at least partially with a receiving time of a paging message or overlapping at least partially with a switching period of uplink and downlink switching;
the second strategy is configured to determine that the WUS is not considered to be detected, in response to the monitoring time of the WUS overlapping at least partially with the receiving time of the paging message or overlapping at least partially with the switching period of uplink and downlink switching.

The base station side can determine whether the first strategy or the second strategy is valid according to its own requirements for sending DCI on the PDCCH. For example, if the base station has more DCI to be sent on the PDCCH, the first strategy can be valid through the indication information. If the base station has less DCI to be sent on the PDCCH, the second strategy can be valid through the indication information.

In this way, the base station can flexibly implement the first strategy or the second strategy according to the transmission requirements of DCI. On the one hand, it can reduce unnecessary monitoring of the UE to save power consumption of the UE, and on the other hand, it can reduce the missed reception of the UE for the DCI as much as possible.

In some embodiments, the indication information includes:
a flag bit;
wherein, the flag bit indicates that the first strategy is valid in response to having a first value;
the flag bit indicates that the second strategy is valid in response to having a second value.

The indication information can be composed of the flag bit with one or more bits. For example, the flag bit can be composed of one bit, so the two values of "0" and "1" of this one bit can indicate that the first strategy and the second strategy are valid respectively.

In other embodiments, the indication information can also include the content of the valid monitoring strategy. In this way, the valid monitoring strategy can be indicated to the UE by directly sending the valid monitoring strategy.

In one embodiment, the method further includes:
determining whether to send the DCI on PDCCH, according to the monitoring strategy, in response to determining according to the resource scheduling for the UE that the monitoring time of the WUS overlaps at least partially with the receiving time of paging message or overlaps at least partially with the switching period of uplink and downlink switching. DCI here includes but is not limited to paging DCI and/or data DCI.

In one embodiment, determining whether to send DCI on PDCCH, according to the monitoring strategy, includes:
determining whether to send DCI on PDCCH according to the valid monitoring strategy indicated in the indication information.

For example, when the indication information indicates that the first strategy is valid, it is determined that DCI is sent to the UE on PDCCH;
For another example, when the indication information indicates that the second strategy is valid, it is determined not to send DCI to the UE on the PDCCH.

As shown in FIG. 8, this embodiment of the present disclosure provides an apparatus for processing a wake up signal. The apparatus includes a first determining module 110.

The first determining module 110 is configured to determine a monitoring result of the WUS according to a monitoring strategy, in response to a monitoring time of the WUS overlapping at least partially with a receiving time of a paging message, or the monitoring time overlapping at least partially with a switching period of uplink and downlink switching.

In one embodiment, the first determining module 110 may be a program module. After the program module is executed by a processor, the monitoring result of the WUS can be determined according to the monitoring strategy, when the monitoring time of the WUS overlaps at least partially with the receiving time of the paging message or overlaps at least partially with the switching period of the uplink and downlink switching.

In another embodiment, the first determining module 110 may be a combination of hardware and software. The software and hardware combination module includes but is not limited to various programmable arrays. The programmable array includes but is not limited to: field programmable array or complex programmable array.

In yet another embodiment, the first determining module 110 may also include a pure hardware module. The pure hardware module includes but is not limited to an application-specific integrated circuit.

In one embodiment, the apparatus further includes:
a second determining module, configured to determine a valid monitoring strategy.

The first determining module 110 is configured to: obtain the monitoring result that the WUS is considered to be detected, in response to the valid monitoring strategy being a first strategy; or, obtain the monitoring result that the WUS is not considered to be detected, in response to the valid monitoring strategy being a second strategy.

In one embodiment, the second determining module is configured to: determine the valid monitoring strategy according to indication information sent by a base station; or, determine the valid monitoring strategy according to a provision of a communication protocol.

In one embodiment, the first determining module 110 is configured to perform at least one of the following:
obtaining the monitoring result that the WUS is considered to be detected, according to the monitoring strategy, in response to the monitoring time of the WUS overlapping at least partially with the receiving time of the paging message;
obtaining the monitoring result that the WUS is considered to be detected, according to the monitoring strategy, in response to a user equipment (UE) being in an RRC connected state and the monitoring time of the WUS being within the switching period of the uplink and downlink switching of the UE.

In one embodiment, the apparatus further includes:
a monitoring module, configured to monitor downlink control information (DCI) at one or more monitoring occasions of the DCI associated with the WUS, in response to the monitoring result being that the WUS is considered to be detected.

In one embodiment, the monitoring module is configured to perform at least one of the following:
monitoring a paging DCI at one or more paging occasions (POs) associated with the WUS, wherein the paging DCI can be used to schedule transmission resources for the paging message;
monitoring a data DCI transmitted on PDCCH for scheduling data transmission by a LTE in an RRC connected state, during an ON duration within one or more discontinuous reception (DRX) cycles associated with the WUS, wherein the data DCI can be used to schedule transmission resources for data.

In one embodiment, the apparatus further includes:
a monitoring module, configured to not monitor DCI at one or more monitoring occasions of the DCI associated with the WUS, in response to the monitoring result being that the WUS is not considered to be detected.

In one embodiment, the monitoring module is configured to perform at least one of the following:
not monitoring a data DCI transmitted on the PDCCH by a UE in a radio resource control (RRC) connected state, during an ON duration within one or more DRX cycles associated with the WUS; wherein, the data DCI can be used to schedule resources for data transmission;
not monitoring a paging DCI at one or more POs associated with the WUS, wherein the paging DCI can be used to schedule transmission resources for the paging message.

As shown in FIG. 9, this embodiment of the present disclosure provides an apparatus for processing a wake up signal. The apparatus includes a sending module 210.

The sending module 210 is configured to send indication information, wherein the indication information is configured to validate a first strategy or a second strategy in monitoring strategies; wherein, the first strategy is configured to determine that the WUS is considered to be detected, in response to a monitoring time of the WUS overlapping at least partially with a receiving time of a paging message or overlapping at least partially with a switching period of uplink and downlink switching;

the second strategy is configured to determine that the WUS is not considered to be detected, in response to the monitoring time of the WUS overlapping at least partially with the receiving time of the paging message or overlapping at least partially with the switching period of the uplink and downlink switching.

In one embodiment, the sending module 210 may be a program module. After the program module is executed by a processor, the indication information indicating the valid monitoring strategy will be sent.

In another embodiment, the sending module 210 may be a combination of hardware and software. The software and hardware combination module includes but is not limited to various programmable arrays. The programmable array includes but is not limited to: field programmable array or complex programmable array.

In yet another embodiment, the sending module 210 may also include a pure hardware module. The pure hardware module includes but is not limited to an application-specific integrated circuit.

In one embodiment, the indication information includes:
a flag bit;
wherein, the flag bit indicates that the first strategy is valid in response to having a first value;
the flag bit indicates that the second strategy is valid in response to having a second value.

The following provides a specific example in combination with any of the above embodiments.

### Provide solutions for missed WUS problems

Scenario 1: A large number of repeated PDSCHs cause the overlap of PDSCH and WUS at the monitoring time, which affects the monitoring at POs (including partial overlap and full overlap).
Scenario 2: During the conversion of the user equipment from uplink to downlink, the overlap between the conversion period and the monitoring time of the WUS affects the monitoring at the PO (including partial overlap and full overlap). (Idle state)
Scenario 3: During the conversion of the user equipment from uplink to downlink, the overlap between the conversion period and the monitoring time of the WUS affects the monitoring in the subsequent ON duration (including partial overlap and full overlap). (Connected state)

It is worth noting that the typical scenarios in which the user equipment mentioned in Scenarios 2 and 3 performs transceiver conversion are: one is the transceiver conversion caused by uplink and downlink conversion for half duplex users, and the other is the transceiver conversion during frequency hopping for narrowband users. Both of these devices will have the conversion period of uplink and downlink conversion.

Scenario 2: During the conversion of uplink and downlink for half duplex users, the overlap between the conversion period and the monitoring time of the WUS affects the monitoring at the PO (including partial overlap and full overlap). (Idle state)

Scenario 3: During the conversion of uplink and downlink for half duplex users, the overlap between the conversion period and the monitoring time of the WUS affects the monitoring in the subsequent ON duration (including partial overlap and full overlap). (Connected state)

For scenarios 1 and 2 that affect the monitoring at PO, and scenario 3 that affects the monitoring in subsequent ON duration, the monitoring strategy adopted is to process the current missed WUS monitoring time as the WUS being detected or the WUS not being detected.

In one embodiment, processing is performed as the WUS not is detected, that is, monitoring at the PO/ON duration within the subsequent WUS valid range:
Case 1: For a 1:1 association scenario, the UE monitors the upcoming PO/ON duration. In the 1:1 association scenario, one WUS corresponds to DCI monitoring at one PO and one ON duration in one DRX cycle.

Case 2: For a 1: N association scenario, the UE monitors the upcoming N POs/ON durations. In the 1: N association scenario, one WUS corresponds to DCI monitoring at one PO and one ON duration in one DRX cycle.

Note: The above two cases correspond to the case that PDSCH of the previous PO will not cover the PDSCH of the next PO.

Case 3: For the 1:1 association scenario, the LTE monitors the PO/ON duration that has started;

Case 4: For the 1: N association scenario, the LTE monitors the PO/ON duration that has started, and monitors subsequent N-1 POs/ON durations that have not started.

Case 5: For the 1: N association scenario, the UE monitors subsequent N-1 POs/ON durations that have not started.

The above three cases correspond to the case where the PDSCH of the previous PO will cover the PDSCH of the next PO.

If the UE is in the RRC idle state, the UE starts the DRX on duration timer to time the ON duration, and the UE wakes up during the ON duration for PDCCH monitoring. At this time, the monitored PDCCH may also include paging DCI, and then according to the transmission resources for the paging messages scheduled by the paging DCI, the UE monitors the paging message on the corresponding transmission resources, and timely exits the RRC idle state based on the paging message, and enters the RRC connected state for data transmission.

In another embodiment, the processing is performed as the WUS being not detected, that is, the PO within the valid range of the subsequent WUS will not be monitored.

Case 1: For a 1:1 association scenario, the LTE does not monitor the upcoming PO/ON duration.

Case 2: For a 1: N association scenario, the LTE does not monitor the upcoming N POs/ON durations.

Note: The above two cases correspond to the case that PDSCH of the previous PO will not cover the PDSCH of the next PO.

Case 3: For the 1:1 association scenario, the UE does not monitor the PO/ON duration that has started.

Case 4: For the 1: N association scenario, the UE does not monitor the PO/ON duration that has started, and does not monitor the subsequent N-1 POs that have not started.

Case 5: For the 1: N association scenario, the UE does not monitor the subsequent N-1 POs/ON durations that have not started.

Note: The above three cases correspond to the case where the PDSCH of the previous PO will cover the PDSCH of the next PO.

For the missed WUS scenario, the monitoring strategy used to determine the monitoring result can be based on protocol provisions or the explicit notification from the base station.

As an embodiment, the protocol stipulates that in the case of missed WUS in Scenario 1, processing is performed as the WUS being detected.

As an embodiment, the protocol stipulates that in the case of missed WUS in Scenario 2, processing is performed as the WUS being detected.

As an embodiment, the base station can notify the terminal of a flag bit about using which strategy in the case of missed WUS. This flag bit is one of the above indication information.

A communication device is provided in embodiments of the present disclosure, and includes a processor, a transceiver, a memory and an executable program stored on the memory and capable of being run by the processor. When the processor runs the executable program, the method for controlling channel detection applied to a LTE provided in any above technical solution is executed, or the method for processing a wake up signal applied to a base station provided in any above technical solution is executed.

The communication device may be the above base station or LTE.

The processor may include various types of storage mediums. The storage medium is a non-transitory computer storage medium, and may continue memorizing information stored thereon when the communication device is powered off. The communication device includes a base station or a LTE.

The processor may be connected to the memory via a bus, and may be configured to read the executable program stored on the memory, for example, as illustrated in at least one of FIG. 2 to FIG. 4 and FIG. 6 to FIG. 7.

A computer storage medium stored with an executable program is provided in embodiments of the disclosure. The executable program is configured to implement the method as described in the solutions of the first aspect or the second aspect, for example, as illustrated in at least one of FIG. 2 to FIG. 4 and FIG. 6 to FIG. 7, when executed by a processor.

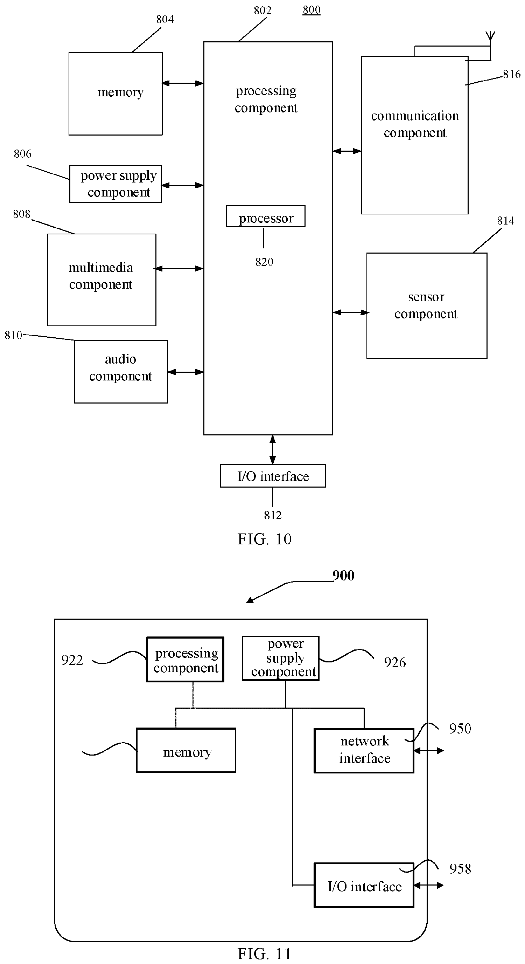

FIG. 10 is a block diagram illustrating a UE 800 according to an exemplary embodiment. For example, the LTE 800 may be a mobile phone, a computer, a digital broadcasting user equipment, a messaging device, a game console, a tablet device, a medical equipment, a fitness equipment, a personal digital assistant, etc.

Referring to FIG. 10, the UE 800 may include at least one component: a processing component 802, a memory 804, a power supply component 806, a multimedia component 808, an audio component 810, an input/output (I/O) of interface 812, a sensor component 814, and a communication component 816.

The processing component 802 generally controls the whole operation of the UE 800, such as the operations related to display, phone call, data communication, camera operation and recording operation. The processing component 802 may include one or more processors 820 to perform instructions, to complete all or part of blocks of the above method. In addition, the processing component 802 may include at least one module for the convenience of interaction between the processing component 802 and other components. For example, the processing component 802 may include a multimedia module for the convenience of interaction between the multimedia component 808 and the processing component 802.

The memory 804 is configured to store all types of data to support the operation of the UE 800. Examples of the data include the instructions of any applications or methods operated on the LTE 800, contact data, phone book data, messages, pictures, videos, etc. The memory 804 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 may provide power supply for all components of the UE 800. The power supply component 806 may include a power supply management system, at least one power supply, and other components related to generating, managing and distributing power for the UE 800.

The multimedia component 808 includes an output interface screen provided between the UE 800 and a user. In some embodiments, a screen may include a liquid crystal display (LCD) and a touch panel (TP). When the screen includes a touch panel, the screen may be implemented as a touch screen to receive input signals from the user. The touch panel includes at least one touch sensor to sense touching, sliding and gestures on the touch panel. The touch sensor may not only sense the boundary of touch or slide action, but also detect wakeup time and pressure related to the touching or sliding operation. In some embodiments, the multimedia component 808 includes a front camera and/or a rear camera. When the UE 800 in operation mode, such as shooting mode or video mode, the front camera or the rear camera may receive the external multimedia data. Each front camera and rear camera may be a fixed optical lens system or an optical lens system with a focal length and an optical zoom capacity.

The audio component 810 is configured as an output and/or input signal. For example, the audio component 810 includes a microphone (MIC). When the UE 800 is in operation mode, such as call mode, record mode, and speech recognition mode, the microphone is configured to receive the external audio signals. The audio signals received may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes at least one sensor configured to provide various aspects of status assessment for the UE 800. For example, the sensor component 814 may detect the on/off state of the UE 800 and the relative positioning of the component. For example, the component is a display and a keypad of the UE 800. The sensor component 814 may further detect the location change of the LTE 800 or one component of the LTE 800, the presence or absence of contact between the user and the UE 800, the orientation or acceleration/deceleration of the UE 800, and the temperature change of the UE 800. The sensor component 814 may include a proximity sensor, which is configured to detect the existence of the objects nearby without any physical contact. The sensor component 814 may further include a light sensor such as a CMOS or CCD image sensor, which is configured in imaging applications. In some embodiments, the sensor component 814 may further include an acceleration transducer, a gyroscope sensor, a magnetic sensor, a pressure sensor or a temperature sensor.

The communication component 816 may be configured for the convenience of wired or wireless communication between the UE 800 and other devices. The UE 800 may access wireless networks based on a communication standard, such as Wi-Fi, 2G or 3G, or their combination. In an exemplary embodiment, the communication component 816 receives broadcast signals or broadcast-related information from an external broadcast management system via a broadcast channel. In an exemplary embodiment, the communication component 816 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an exemplary embodiment, the UE 800 may be implemented by at least one application specific integrated circuit(ASIC), digital signal processor (DSP), digital signal processing device (DSPD), programmable logic device (PLD), field programmable gate array (FPGA), controller, microcontroller, microprocessor or other electronics components, which is configured to perform the above method.

In an exemplary embodiment, a non-transitory computer readable storage medium including instructions is further provided, such as the memory 804 including instructions, the instructions may be executed by the processor 820 of the LTE 800 to complete the above method. For example, the non-transitory computer readable storage medium may be a ROM, a random access memory (RAM), a CD-ROM, a magnetic tape, a floppy disk, an optical data storage device, etc.

FIG. 11 is a block diagram illustrating a structure of a base station according to one embodiment of the disclosure. For example, the base station 900 may be provided as a network device. As illustrated in FIG. 11, the base station 900 includes a processing component 922, which further includes at least one processor, and memory resources represented by the memory 932, which are configured to store instructions executable by the processing component 922, for example, an application. The application stored in the memory 932 may include one or more modules each of which corresponds to a set of instructions. In addition, the processing component 922 is configured to execute instructions, to execute any one method applied to the base station as described in the above method, for example, the method as illustrated in FIGS. 2 to 3.

The base station 900 may further include one power supply component 926 configured to execute power management of the base station 900, one wired or wireless network interface 950 configured to connect the base station 900 to a network, and one input/output(I/O) interface 958. The base station 900 may operate an operating system stored in the memory 932, for example, Windows Server TM, Mac OS XTM, UnixTM, LinuxTM, FreeBSDTM or similar.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A method for processing a wake up signal (WUS), comprising:
determining a monitoring result of the WUS according to a monitoring strategy, in response to a monitoring time of the WUS overlapping at least partially with a receiving time of a paging message, or the monitoring time overlapping at least partially with a switching period of uplink and downlink switching.

2. The method of claim 1, further comprising:
determining a valid monitoring strategy;
wherein determining the monitoring result of the WUS the according to the monitoring strategy, comprises: obtaining the monitoring result that the WUS is considered to be detected, in response to the valid monitoring strategy being a first strategy; or, obtaining the monitoring result that the WUS is not considered to be detected, in response to the valid monitoring strategy being a second strategy.

3. The method of claim 2, wherein determining the valid monitoring strategy comprises:
determining the valid monitoring strategy according to indication information sent by a base station;
or,
determining the valid monitoring strategy according to a provision of a communication protocol.

4. The method of claim 1, wherein determining the monitoring result of the WUS according to the monitoring strategy comprises at least one of the following:
obtaining the monitoring result that the WUS is considered to be detected, according to the monitoring strategy, in response to the monitoring time of the WUS overlapping at least partially with the receiving time of the paging message;
obtaining the monitoring result that the WUS is considered to be detected, according to the monitoring strategy, in response to a user equipment (UE) being in an RRC connected state and the monitoring time of the WUS being within the switching period of the uplink and downlink switching of the UE.

5. The method of any of claims 1 to 4, further comprising:
monitoring downlink control information (DCI) at one or more monitoring occasions of the DCI associated with the WUS, in response to the monitoring result being that the WUS is considered to be detected.

6. The method of claim 5, wherein monitoring the downlink control information (DCI) at one or more monitoring occasions of the DCI associated with the WUS, comprises at least one of the following:
monitoring a paging DCI at one or more paging occasions (POs) associated with the WUS, wherein the paging DCI can be used to schedule transmission resources for the paging message;
monitoring a data DCI transmitted on PDCCH for scheduling data transmission by a UE in an RRC connected state, during an ON duration within one or more discontinuous reception (DRX) cycles associated with the WUS, wherein the data DCI can be used to schedule transmission resources for data.

7. The method of any of claims 1 to 4, further comprising:
not monitoring DCI at one or more monitoring occasions of the DCI associated with the WUS, in response to the monitoring result being that the WUS is not considered to be detected.

8. The method of claim 7, wherein not monitoring DCI at one or more monitoring occasions of the DCI associated with the WUS, in response to the monitoring result being that the WUS is not considered to be detected, comprises at least one of the following:
not monitoring a data DCI transmitted on PDCCH by a LTE in a radio resource control (RRC) connected state, during an ON duration within one or more DRX cycles associated with the WUS; wherein, the data DCI can be used to schedule resources for data transmission;
not monitoring a paging DCI at one or more POs associated with the WUS, wherein the paging DCI can be used to schedule transmission resources for the paging message.

9. A method for processing a wake up signal (WUS), comprising:
sending indication information, wherein the indication information is configured to validate a first strategy or a second strategy in monitoring strategies; wherein, the first strategy is configured to determine that the WUS is considered to be detected, in response to a monitoring time of the WUS overlapping at least partially with a receiving time of a paging message or overlapping at least partially with a switching period of uplink and downlink switching;
the second strategy is configured to determine that the WUS is not considered to be detected, in response to the monitoring time of the WUS overlapping at least partially with the receiving time of the paging message or overlapping at least partially with the switching period of the uplink and downlink switching.

10. The method of claim 9, wherein the indication information comprises:
a flag bit;
wherein, the flag bit indicates that the first strategy is valid in response to having a first value;
the flag bit indicates that the second strategy is valid in response to having a second value.

11. An apparatus for processing a wake up signal (WUS), comprising:
a first determining module, configured to determine a monitoring result of the WUS according to a monitoring strategy, in response to a monitoring time of the WUS overlapping at least partially with a receiving time of a paging message, or the monitoring time overlapping at least partially with a switching period of uplink and downlink switching.

12. The apparatus of claim 11, further comprising:
a second determining module, configured to determine a valid monitoring strategy;
wherein the first determining module is configured to: obtain the monitoring result that the WUS is considered to be detected, in response to the valid monitoring strategy being a first strategy; or, obtain the monitoring result that the WUS is not considered to be detected, in response to the valid monitoring strategy being a second strategy.

13. The apparatus of claim 12, wherein the second determining module is configured to: determine the valid monitoring strategy according to indication information sent by a base station; or, determine the valid monitoring strategy according to a provision of a communication protocol.

14. The apparatus of claim 11, wherein the first determining module is configured perform at least one of the following:
obtaining the monitoring result that the WUS is considered to be detected, according to the monitoring strategy, in response to the monitoring time of the WUS overlapping at least partially with the receiving time of the paging message;
obtaining the monitoring result that the WUS is considered to be detected, according to the monitoring strategy, in response to a user equipment (UE) being in an RRC connected state and the monitoring time of the WUS being within the switching period of the uplink and downlink switching of the UE.

15. The apparatus of any of claims 11 to 14, further comprising:
a monitoring module, configured to monitor downlink control information (DCI) at one or more monitoring occasions of the DCI associated with the WUS, in response to the monitoring result being that the WUS is considered to be detected.

16. The apparatus of claim 15, wherein the monitoring module is configured to perform at least one of the following:
monitoring a paging DCI at one or more paging occasions (POs) associated with the WUS, wherein the paging DCI can be used to schedule transmission resources for the paging message;
monitoring a data DCI transmitted on PDCCH for scheduling data transmission by a UE in an RRC connected state, during an ON duration within one or more discontinuous reception (DRX) cycles associated with the WUS, wherein the data DCI can be used to schedule transmission resources for data.

17. The apparatus of any of claims 11 to 14, further comprising:
a monitoring module, configured to not monitor DCI at one or more monitoring occasions of the DCI associated with the WUS, in response to the monitoring result being that the WUS is not considered to be detected.

18. The apparatus of claim 17, wherein the monitoring module is configured to perform at least one of the following:
not monitoring a data DCI transmitted on PDCCH by a LTE in a radio resource control (RRC) connected state, during an ON duration within one or more DRX cycles associated with the WUS; wherein, the data DCI can be used to schedule resources for data transmission;
not monitoring a paging DCI at one or more POs associated with the WUS, wherein the paging DCI can be used to schedule transmission resources for the paging message.

19. An apparatus for processing a wake up signal, comprising:
a sending module, configured to send indication information, wherein the indication information is configured to validate a first strategy or a second strategy in monitoring strategies; wherein, the first strategy is configured to determine that the WUS is considered to be detected, in response to a monitoring time of the WUS overlapping at least partially with a receiving time of a paging message or overlapping at least partially with a switching period of uplink and downlink switching;
the second strategy is configured to determine that the WUS is not considered to be detected, in response to the monitoring time of the WUS overlapping at least partially with the receiving time of the paging message or overlapping at least partially with the switching period of the uplink and downlink switching.

20. The apparatus of claim 19, wherein the indication information comprises:
a flag bit;
wherein, the flag bit indicates that the first strategy is valid in response to having a first value;
the flag bit indicates that the second strategy is valid in response to having a second value.

21. A communication device, comprising a processor, a transceiver, a memory and an executable program that is stored on the memory and can be run by the processor, wherein, when the processor runs the executable program, the method of any one of claims 1 to 8 or claims 9 to 10 is implemented.

22. A computer storage medium with an executable program stored thereon, wherein when the executable program is executed by a processor, the method of any one of claims 1 to 8 or claims 9 to 10 is implemented.
